# EUROPÄISCHE PATENTSCHRIFT

(11) **EP 4 183 654 B1**
(45) Veröffentlichungstag und Bekanntmachung des Hinweises auf die Patenterteilung: **14.05.2025**
(21) Anmeldenummer: 22208892.4
(22) Anmeldetag: 22.11.2022
(51) Int. Cl.: B60W 40/10, B60W 40/114, B60W 30/18, G01C 21/16, G01C 21/26

(54) **VERFAHREN UND VORRICHTUNG ZUM BESTIMMEN EINER FAHRZEUGPOSE EINES FAHRZEUGS**
METHOD AND DEVICE FOR DETERMINING A VEHICLE POSE OF A VEHICLE
PROCÉDÉ ET DISPOSITIF DE DÉTERMINATION D'UNE POSITION D'UN VÉHICULE

(30) Priorität: 23.11.2021 DE 102021213146
(43) Veröffentlichungstag der Anmeldung: 24.05.2023
(73) Patentinhaber: VOLKSWAGEN AG, 38440 Wolfsburg (DE)
(72) Erfinder: Kube, Roland, 38179 Schwülper (DE); Koch, Niklas, 38479 Tappenbeck (DE); Iken, Timo, 29378 Wittingen (DE)

(56) Entgegenhaltungen:
- EP-A2- 1 096 230
- EP-A2- 3 462 132
- US-A1- 2018 045 519

## Beschreibung

Die Erfindung betrifft ein Verfahren und eine Vorrichtung zum Bestimmen einer Fahrzeugpose eines Fahrzeugs.

Für eine kollisionsfreie Fahrt von automatisiert fahrenden Fahrzeugen ist die Kenntnis einer aktuellen Fahrzeugpose, bestehend aus Fahrzeugposition und Fahrzeugorientierung, erforderlich. Um diese berechnen zu können werden üblicherweise Kamera- und Radarsysteme eingesetzt, die aus mehreren, über das Fahrzeug verteilten Modulen bestehen. Diese ermöglichen eine sehr gute Umfelderfassung und erlauben es, einen Fehler beim Bestimmen der Fahrzeugpose klein zu halten.

Voraussetzung hierfür ist jedoch eine kontinuierliche Verarbeitung und Auswertung der Kamerabilder und Radarsignale mit Hilfe geeigneter Bild- und Signalverarbeitungsverfahren. Diese sind jedoch sehr rechenintensiv und erfordern, bei einer erforderlichen Wiederholfrequenz von bis zu 10 Hz, eine Recheneinheit mit leistungsstarkem Prozessor bzw. leistungsstarken Prozessorkernen.

Um die damit verbundenen erhöhten Kosten in Grenzen zu halten, kann das Bestimmen der Fahrzeugpose bei Kenntnis eines bekannten Bezugspunkts (Anfangspose) alternativ durch einfache Messung der Fahrzeugbeschleunigungen und -drehraten sowie anschließender mathematischer Integration erfolgen. Der Nachteil dieses weniger rechenintensiven Verfahrens besteht jedoch in einer unvermeidlichen Drift der mittels Integration berechneten Fahrzeugpose, da (temperaturabhängige) Offsets von verwendeten Beschleunigungs- und Drehratensensoren mit dem eigentlichen Nutzsignal integriert werden und sich hierdurch ein kontinuierlich zunehmender Fehler ergibt.

Um diesen Fehler nicht zu groß werden zu lassen, erfolgt die Berechnung der Fahrzeugpose oftmals nicht nur durch Integration der Fahrzeugbeschleunigungen und -drehraten, sondern durch zusätzliche Berücksichtigung der Signale für die Radumdrehungen. Hierdurch kann der Anstieg des Fehlers soweit reduziert werden, dass eine maximal zulässige Fehlergrenze innerhalb von kleinen bis mittleren Zeitintervallen nicht überschritten wird. Hierdurch kann die jeweils aktuelle Fahrzeugpose beispielsweise bei Einparkmanövern mit typischerweise kurzen Phasen des Vor- und Rückwärtsrangierens genügend genau berechnet werden. Dies kann jedoch nur erfolgen, da es möglich ist, die temperaturabhängigen Offsets der Beschleunigungs- und Drehratensensoren während des wiederholten Fahrzeugstillstands zwischen den Phasen des Vor- und Rückwärtsrangierens zu kompensieren.

Bei längeren Fahrtabschnitten hingegen besteht keine Möglichkeit einer rechtzeitigen Offsetkompensation, sodass der Fehler bei der Berechnung der Fahrzeugpose auch bei zusätzlicher Berücksichtigung der Signale für die Radumdrehungen auf Grund des im Allgemeinen nicht genau bekannten Reifenschlupfs eine maximal zulässige Fehlergrenze überschreitet.

Aus der US 2020/0192396 A1 ist ein Fahrsteuersystem eines autonomen Fahrzeugs bekannt. Dieses umfasst einen 2D-LIDAR-Sensor, einen Radgeschwindigkeitssensor zum Erfassen einer Geschwindigkeit des Fahrzeugs und einen Gierratensensor zum Erfassen einer Drehwinkelgeschwindigkeit des Fahrzeugs. Ferner umfasst das System einen Fehlerkorrigierer zum Bestimmen einer Geradeaussituation unter Verwendung eines vom 2D-LIDAR-Sensor erfassten LIDAR-Punkts, zum Extrahieren eines geraden seitlichen Abstandswerts gemäß dem Bestimmungsergebnis, zum Akkumulieren des LIDAR-Punkts gemäß der Fahrbahn des Fahrzeugs, die vom Radgeschwindigkeitssensor und dem Gierratensensor erfasst wird, zum Schätzen eines Fehlers zwischen dem akkumulierten Punkt und der extrahierten geraden Linie und zum Berechnen und Rückkoppeln eines Offset-Korrekturparameters des Gierratensensors, wenn der geschätzte Fehlerwert größer als ein vorbestimmter Schwellenwert ist, um einen Fehlerparameter des Gierratensensors automatisch zu korrigieren.

Aus der US 2008/0294342 A1 ist eine Koppelnavigationseinheit bekannt. Diese berechnet die Fahrzeugposition aus einem Nickwinkel und einem Gierwinkel von Koppelnavigationssensoren, einem Sensorinstallations-Nickwinkel und einem Sensorinstallations-Gierwinkel und einer durch einen Geschwindigkeitssensor berechneten Bewegungsstrecke und berechnet die Fahrzeuggeschwindigkeit aus einem Beschleunigungssignal. In einem ersten Zyklus berechnet eine erste Korrektureinheit die Fahrzeuggeschwindigkeit aus Signalen, die von dem Geschwindigkeitssensor ausgegeben werden, und korrigiert den Nickwinkel, den Sensorinstallations-Nickwinkel und den Sensorinstallations-Gierwinkel basierend auf der Differenz zwischen der so berechneten Fahrzeuggeschwindigkeit und der von der Koppelnavigationseinheit berechneten Fahrzeuggeschwindigkeit. In einem zweiten Zyklus korrigiert eine zweite Korrektureinheit den Nickwinkel, den Neigungswinkel der Sensorinstallation, den Gierwinkel und den Gierwinkel der Sensorinstallation unter Verwendung der Fahrzeugposition und -geschwindigkeit, die von einem GPS-Empfänger ausgegeben wird, und der Fahrzeugposition und -geschwindigkeit, die von dem Koppelnavigationseinheit ausgegeben wird.

Aus der EP 1 096 230 A2 ist ein Trägheitsnavigationssystem für Fahrzeuge bekannt, auch bekannt als Koppelnavigationssystem für die Navigation eines Fahrzeugs. Das Trägheitsnavigationssystem kann allein oder in Kombination mit anderen Mitteln zur Positionsbestimmung, wie GPS und Kartendatenbanken, verwendet werden, um den Standort eines Fahrzeugs zu bestimmen. Das Koppelnavigationssystem hat mehrere Vorteile gegenüber bestehenden Systemen. Erstens kann es leicht am Fahrgestell eines beliebigen Fahrzeugs angebracht werden. Zweitens benötigt es keine Schnittstelle zu den vorhandenen Sensoren des Fahrzeugs. Drittens enthält das System eine Logik zur Beseitigung von Fehlern bei der Positions- und Kursbestimmung, die durch die Abwinkelung/Drehung des Fahrgestells und der Trägheitsführungssensoren verursacht werden, die durch die Neigung oder das Kippen des Fahrgestells in Bezug auf einen inertialen/quasi-inertialen Bezugsrahmen, wie z. B. die Erde, verursacht werden. Das Trägheitsführungssystem umfasst: einen Trägheitsführungssensor, eine Übersetzungseinheit und eine Logikeinheit. Der Trägheitsführungssensor ist zur Kopplung mit dem Fahrzeug geeignet. Der Trägheitsführungssensor erfasst die Bewegung des Fahrzeugs in einem nichtinertialen Bezugssystem und bildet ein entsprechendes Sensorsignal. Die Übersetzungseinheit ist so gekoppelt, dass sie das von dem Trägheitsführungssensor erzeugte Sensorsignal empfängt. Die Übersetzungseinheit übersetzt das Sensorsignal in ein quasiinertiales Bezugssystem und bildet ein entsprechendes übersetztes Signal. Die Logikeinheit empfängt das von der Übersetzungseinheit gebildete übersetzte Signal und wandelt das übersetzte Signal in eine geschätzte Position und einen geschätzten Kurs des Fahrzeugs um.

Aus der US 2018 / 0 045 519 A1 ist ein Verfahren zur Lokalisierung und Kartierung bekannt, bei dem ein Bild mit einer an einem Fahrzeug angebrachten Kamera aufgezeichnet wird, wobei das Fahrzeug einem globalen Systemstandort zugeordnet ist; eine in dem Bild dargestellte Landmarke mit einem Landmarken-Identifizierungsmodul eines dem Fahrzeug zugeordneten Computersystems identifiziert wird, wobei die identifizierte Landmarke einen geografischen Standort der Landmarke und einen bekannten Parameter aufweist; Extrahieren eines Satzes von Wahrzeichenparametern aus dem Bild mit einem Merkmalsextraktionsmodul des Computersystems; Bestimmen einer relativen Position zwischen dem Fahrzeug und dem geografischen Ort des Wahrzeichens in dem Computersystem auf der Grundlage eines Vergleichs zwischen dem extrahierten Satz von Wahrzeichenparametern und dem bekannten Parameter; und Aktualisieren des globalen Systemstandorts in dem Computersystem auf der Grundlage der relativen Position.

Aus der EP 3 462 132 A2 ist ein Verfahren zum Bestimmen einer aktuellen Position eines Kraftfahrzeugs in einem Umgebungsbereich des Kraftfahrzeugs bekannt, wobei von einer Steuereinrichtung des Kraftfahrzeugs Inertialsensordaten einer Inertialsensoreinrichtung des Kraftfahrzeugs sowie Odometriedaten einer Odometriesensoreinrichtung des Kraftfahrzeugs empfangen werden und wobei anhand der Inertialsensordaten des Kraftfahrzeugs ein, eine Bewegung des Kraftfahrzeugs beschreibender Bewegungsvektor bestimmt wird, anhand der Odometriedaten die Bewegung des Kraftfahrzeus beschreibende Stützdaten bestimmt werden, anhand der Stützdaten der Bewegungsvektor korrigiert wird und in Abhängigkeit von dem korrigierten Bewegungsvektor die aktuelle Position des Kraftfahrzeugs bestimmt wird.

Der Erfindung liegt die Aufgabe zu Grunde, ein Verfahren und eine Vorrichtung zum Bestimmen einer Fahrzeugpose eines Fahrzeugs, insbesondere im Hinblick auf eine Driftkorrektur, zu verbessern.

Die Aufgabe wird erfindungsgemäß durch ein Verfahren mit den Merkmalen des Patentanspruchs 1 und eine Vorrichtung mit den Merkmalen des Patentanspruchs 10 gelöst. Vorteilhafte Ausgestaltungen der Erfindung ergeben sich aus den Unteransprüchen.

Insbesondere wird ein Verfahren zum Bestimmen einer Fahrzeugpose eines Fahrzeugs zur Verfügung gestellt, wobei die Fahrzeugpose ausgehend von Sensordaten zumindest von Beschleunigungssensoren und Drehratensensoren und einer bekannten Ausgangspose mittels Integration geschätzt wird, wobei die geschätzte Fahrzeugpose mit Hilfe von mindestens einer Referenzfahrzeugpose korrigiert wird, wobei zeitliche Abstände zwischen dem Korrigieren (d.h. zwischen den Korrekturzeitpunkten) unter Berücksichtigung von einer aktuellen Fahrsituation des Fahrzeugs festgelegt werden.

Ferner wird insbesondere eine Vorrichtung zum Bestimmen einer Fahrzeugpose eines Fahrzeugs geschaffen, umfassend Beschleunigungssensoren, Drehratensensoren, und eine Datenverarbeitungseinrichtung, wobei die Datenverarbeitungseinrichtung dazu eingerichtet ist, ausgehend von Sensordaten zumindest der Beschleunigungssensoren und der Drehratensensoren und einer bekannten Ausgangspose mittels Integration eine Fahrzeugpose zu schätzen, mindestens eine Referenzfahrzeugpose zu erhalten und die geschätzte Fahrzeugpose mit Hilfe der mindestens einen Referenzfahrzeugpose zu korrigieren, und zeitliche Abstände zwischen dem Korrigieren (d.h. zwischen den Korrekturzeitpunkten) unter Berücksichtigung von einer aktuellen Fahrsituation des Fahrzeugs festzulegen.

Das Verfahren und die Vorrichtung ermöglichen es, Abstände zwischen dem Korrigieren (d.h. zwischen den Korrekturzeitpunkten), an denen die geschätzte Fahrzeugpose mit Hilfe der mindestens einen Referenzfahrzeugpose korrigiert wird, unter Berücksichtigung der aktuellen Fahrsituation festzulegen. Dies ermöglicht insbesondere eine variable Wahl der zeitlichen Abstände, sodass Korrekturen einer Drift (fahr-)situationsabhängig vorgenommen werden können. Hierdurch wird insbesondere erreicht, dass nur korrigiert wird, wenn dies auch notwendig ist. Es kann daher Rechenleistung eingespart werden, sodass eine Recheneinrichtung kleiner dimensioniert werden kann und/oder ein Energiebedarf verringert werden kann. Je nach aktueller Fahrsituation kann ein durch das Integrieren kontinuierlich wachsender Fehler unterschiedlich stark anwachsen. Entsprechend kann mittels des Verfahrens und der Vorrichtung auf die Geschwindigkeit des anwachsenden Fehlers situationsabhängig und hierdurch situationsadequat reagiert werden, indem häufiger oder weniger häufiger korrigiert wird. Bei isolierter Betrachtung der Situationen wächst ein Fehler bei einer Geradeausfahrt in der Regel langsamer an als bei einer Kurvenfahrt. Auch bei Kurvenfahrten mit unterschiedlichem Krümmungsradius variiert in der Regel die Rate, mit der der Fehler anwächst. Insbesondere variiert bei unterschiedlichen Kurvenradien ein Reifenschlupf in Querrichtung. Dies führt zu unterschiedlichen Fehlern im Gierwinkel und hieraus resultierend unterschiedlichen Fehlern bei der Berechnung (z.B. der x- und y-Komponente) der Fahrzeugposition. Auch hier kann in situationsabhängig gewählten Abständen mit Hilfe der Referenzfahrzeugpose korrigiert werden. Es kann grundsätzlich hierbei auch vorgesehen sein, dass situationsabhängig zumindest bis zur nächsten Fahrsituation ein konstanter zeitlicher Abstand zwischen den Korrekturzeitpunkten gewählt wird.

Eine Fahrzeugpose umfasst insbesondere eine Fahrzeugposition und eine Fahrzeugorientierung. Die Fahrzeugposition kann hierbei beispielsweise Koordinaten eines Globalkoordinatensystems umfassen. Die Fahrzeugorientierung umfasst zumindest einen Gierwinkel, insbesondere in Bezug auf ein Globalkoordinatensystem. Die Fahrzeugpose wird mittels Sensordaten zumindest von Beschleunigungssensoren und Drehratensensoren geschätzt. Anders ausgedrückt, wird die Fahrzeugpose insbesondere mittels eines Trägheitsnavigationssystems bzw. eines inertialen Navigationssystems geschätzt.

Eine Ausgangspose bezeichnet insbesondere die letzte bekannte bzw. geschätzte Fahrzeugpose. Die Ausgangspose bildet insbesondere eine Bezugspose oder eine Startpose für die Integration. Ausgehend von der Ausgangspose wird dann insbesondere die nächste Fahrzeugpose ausgehend von Sensordaten zumindest der Beschleunigungssensoren und der Drehratensensoren mittels Integration bestimmt bzw. berechnet. Es kann vorgesehen sein, dass beim Schätzen der Fahrzeugpose zusätzlich auch Drehratensensoren bzw. Drehratensignale für die Reifen des Fahrzeugs berücksichtigt werden.

Eine Referenzfahrzeugpose (Referenzpose des Fahrzeugs) bezeichnet insbesondere eine mittels anderer Sensoren und/oder auf andere Weise als die geschätzte Fahrzeugpose bestimmte Fahrzeugpose. Die Referenzfahrzeugpose ist bzw. wird hierbei insbesondere derart bestimmt, dass eine Genauigkeit und/oder Zuverlässigkeit größer ist als bei der geschätzten Fahrzeugpose. Insbesondere ist vorgesehen, dass die Referenzfahrzeugpose nur für die Korrekturzeitpunkte bestimmt wird, um eine für das Bereitstellen der Referenzfahrzeugpose notwendige Rechenleistung gering zu halten.

Eine aktuelle Fahrsituation bezeichnet insbesondere eine Situation und/oder ein Szenario, in dem das Fahrzeug sich aktuell, das heißt, zum Zeitpunkt des Schätzens der Fahrzeugpose, gerade befindet. Die aktuelle Fahrsituation kann insbesondere mindestens eine Ausprägung eines der nachfolgenden Merkmale umfassen: ein Verkehrsszenario (z.B. Geradeausfahrt, Kurvenfahrt, Einparken, Ausparken, freier Himmel, im Parkhaus etc.), Fahrzeugparameter (Geschwindigkeit, Beschleunigung etc.) und/oder eine Witterung (Temperatur, Regen, Glätte etc.).

Die zeitlichen Abstände zwischen dem Korrigieren werden unter Berücksichtigung der aktuellen Fahrsituation festgelegt. Hierbei können insbesondere Nachschlagetabellen (Look Up-Tabellen) verwendet werden, in denen zu Fahrsituationen jeweils die zeitlichen Abstände und/oder Rechenvorschriften zum Berechnen der Zeitpunkte hinterlegt sind, sodass diese aus der Nachschlagetabelle bei Bedarf abgerufen werden können. Die zeitlichen Abstände und/oder die Zeitpunkte (bzw. eine entsprechende Rechenvorschrift zum Berechnen der Zeitpunkte) für unterschiedliche Fahrsituationen können beispielsweise mit Hilfe von empirischen Versuchsreihen und/oder von Simulationen bestimmt werden. Hierbei kann insbesondere vorgesehen sein, dass die zeitlichen Abstände derart gewählt bzw. festgelegt werden, dass ein Fehler stets unterhalb eines vorgegebenen Grenzwertes bleibt. Es ist insbesondere vorgesehen, dass die Referenzfahrzeugpose dann nur für die Korrekturzeitpunkte bestimmt wird bzw. bestimmt werden muss.

Das Verfahren und die Vorrichtung werden insbesondere in einem Fahrzeug verwendet. Das Fahrzeug ist insbesondere ein Kraftfahrzeug. Das Fahrzeug kann grundsätzlich aber auch ein anderes Land-, Schienen-, Wasser-, Luft- oder Raumfahrzeug sein, beispielsweise eine Drohne oder ein Lufttaxi. Es wird insbesondere auch ein Fahrzeug geschaffen, umfassend mindestens eine Vorrichtung nach einer der beschriebenen Ausführungsformen.

Teile der Vorrichtung, insbesondere die Datenverarbeitungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind.

In einer Ausführungsform ist vorgesehen, dass als Fahrsituationen zumindest Geradeausfahrten und/oder Kurvenfahrten und/oder Bergfahrten unterschieden werden. Hierdurch können Fälle unterschieden werden, bei denen sich eine Anwachsgeschwindigkeit des Fehlers unterscheidet. Es kann ferner vorgesehen sein, dass bei den Kurvenfahrten weitere Unterscheidungen, beispielsweise nach einem Krümmungsradius, vorgenommen werden. Ferner kann bei den Bergfahrten eine Unterscheidung von positiven oder negativen Steigungen und/oder von einer Änderung der Steigung erfolgen.

In einer Ausführungsform ist vorgesehen, dass die aktuelle Fahrsituation ausgehend von Sensordaten zumindest der Beschleunigungssensoren und der Drehratensensoren bestimmt wird. Hierdurch kann die aktuelle Fahrsituation auf besonders einfache Weise bestimmt werden. Die Sensordaten zumindest der Beschleunigungssensoren und der Drehratensensoren werden hierzu insbesondere kontinuierlich mittels der Datenverarbeitungseinrichtung ausgewertet. Beispielsweise können Muster in den Sensordaten erkannt werden, beispielsweise mit Hilfe von Verfahren des Maschinenlernens oder der Künstlichen Intelligenz. Alternativ oder zusätzlich können die Sensordaten, beispielsweise die Beschleunigungswerte, mit Schwellenwerten verglichen werden, um eine aktuelle Fahrsituation zu identifizieren. Um eine Kurvenfahrt von einer Geradeausfahrt zu unterscheiden, können beispielsweise Querbeschleunigungswerte mit einem vorgegebenen Schwellenwert oder mehreren vorgegebenen Schwellenwerten verglichen werden. Wird der Schwellenwert überschritten, so wird auf eine Kurvenfahrt geschlossen. Wird der Schwellenwert hingegen nicht überschritten, so wird auf eine Geradeausfahrt geschlossen. Bei mehreren abgestuften Schwellenwerten kann auf einen Krümmungsradius einer Kurvenfahrt geschlossen werden, wobei hierbei insbesondere auch eine Gierrate des Fahrzeugs berücksichtigt wird. Je größer eine erfasste Querbeschleunigung ist, desto kleiner können beispielsweise die zeitlichen Abstände zwischen dem Korrigieren der geschätzten Fahrzeugpose gewählt werden. Aus einem Vorzeichen der Querbeschleunigung kann eine Kurvenart identifiziert werden (Rechtskurve oder Linkskurve).

In einer weiterbildenden Ausführungsform ist vorgesehen, dass zum Bestimmen der aktuellen Fahrsituation ein einzelner Freiheitsgrad der Beschleunigungssensoren und/oder der Drehratensensoren überwacht und ausgewertet wird. Hierdurch ist das Überwachen und Auswerten besonders einfach ausgestaltet und erfordert nur wenig Rechenleistung und Speicher. Der Freiheitsgrad kann beispielsweise mit einer Querbeschleunigung des Fahrzeugs zusammenfallen bzw. diese umfassen.

In einer alternativen weiterbildenden Ausführungsform ist vorgesehen, dass zum Bestimmen der aktuellen Fahrsituation eine Mehrzahl von Freiheitsgraden der Beschleunigungssensoren und/oder der Drehratensensoren überwacht und ausgewertet wird. Hierdurch lassen sich verschiedene Fahrsituationen besser voneinander unterscheiden. Insbesondere können Muster in den Sensordaten von der Mehrzahl der Freiheitsgrade verbessert, insbesondere trennschärfer, erkannt werden.

In einer Ausführungsform ist vorgesehen, dass die ausgehend von den Sensordaten zumindest der Beschleunigungssensoren und der Drehratensensoren geschätzte Fahrzeugpose mit einer ausgehend von Radumdrehungen und Lenkwinkeln geschätzten weiteren Fahrzeugpose verglichen wird, wobei die geschätzte Fahrzeugpose, insbesondere zusätzlich, korrigiert wird, wenn eine Differenz zwischen der geschätzten Fahrzeugpose und der geschätzten weiteren Fahrzeugpose einen vorgegebenen Grenzwert überschreitet. Hierdurch wird eine weitere, insbesondere zusätzliche, Möglichkeit geschaffen, die zeitlichen Abstände des Korrigierens direkt ausgehend von den Sensordaten festzulegen. Insbesondere lässt sich diese Ausführungsform mit geringem technischen Aufwand realisieren, da die genannten Sensoren üblicherweise ohnehin in Fahrzeugen vorhanden sind.

In einer Ausführungsform ist vorgesehen, dass die Referenzfahrzeugpose ausgehend von einem gewichteten Mittelwert bestimmt wird, wobei der Mittelwert sich gewichtet zusammensetzt zumindest aus der Fahrzeugpose, die ausgehend von den Sensordaten zumindest der Beschleunigungssensoren und der Drehratensensoren geschätzt wird, und einer weiteren Fahrzeugpose, die ausgehend von Radumdrehungen und Lenkwinkeln geschätzt wird. Hierdurch kann ein Aufwand beim Bestimmen der Referenzfahrzeugpose reduziert werden, da die genannten Sensoren in der Regel in Fahrzeugen bereits vorhanden sind. Ein Gewichtungsfaktor kann beispielsweise ausgehend von empirischen Versuchsreihen und/oder Simulationen bestimmt und festgelegt werden.

In einer Ausführungsform ist vorgesehen, dass die Referenzfahrzeugpose mittels erfasster Kameradaten mindestens einer Umfeldkamera des Fahrzeugs und/oder erfasster Radardaten mindestens eines Radarsensors des Fahrzeugs und/oder erfasster Lidardaten mindestens eines Lidarsensors des Fahrzeugs bestimmt wird. Hierdurch kann die Referenzfahrzeugpose besonders zuverlässig und genau bestimmt werden. Zum Bestimmen der Referenzfahrzeugpose kommen hierbei an sich bekannte Verfahren der Lokalisierung in Umfeldern zum Einsatz. Insbesondere können Merkmale im Umfeld erkannt werden und zur Lokalisierung des Fahrzeugs in einer (Umfeld-) Karte verwendet werden.

In einer Ausführungsform ist vorgesehen, dass die aktuelle Fahrsituation ausgehend von einer Straßenkarte bestimmt wird. Hierdurch können beispielsweise auch vergangene und/oder zukünftige Straßenverläufe berücksichtigt werden. Ausgehend von der aktuellen Fahrzeugpose wird das Fahrzeug in der Straßenkarte lokalisiert und die aktuelle Fahrsituation, beispielsweise ein Straßenverlauf (Geradeausfahrt oder Kurvenfahrt etc.), bestimmt. Ferner können weitere Merkmale eines aktuellen Umfelds berücksichtigt werden, wie beispielsweise negative oder positive Steigungen und/oder eine Änderung der Steigung, ein Straßenbelag etc. Insbesondere negative oder positive Steigungen und/oder Änderungen der Steigung können zum Bestimmen der aktuellen Fahrsituation genutzt werden. In einem beispielhaften Szenario fährt das Fahrzeug über eine Straße mit geringer positiver oder negativer Steigung (Steigung ≈ 0), wobei auf der Straße an ausgezeichneten Stellen ausgeprägte Steigungen auftreten. Diese ausgezeichneten Stellen können dann zum Bestimmen der aktuellen Fahrsituation verwendet werden, wobei die aktuelle Fahrsituation (z.B. Bergauf, Bergab etc.) in der Straßenkarte hinterlegt ist.

In einer Ausführungsform ist vorgesehen, dass die Referenzfahrzeugpose ausgehend von einer Straßenkarte unter Berücksichtigung der aktuellen Fahrsituation bestimmt wird. Hierdurch kann die Referenzfahrzeugpose insbesondere ohne weitere Sensorik bestimmt werden.

Insbesondere ist hierbei vorgesehen, dass die Referenzfahrzeugpose ausgehend von einem mit der aktuellen Fahrsituation korrespondierenden Fahrbahnverlauf in der Straßenkarte bestimmt wird. Hierzu werden insbesondere die Sensordaten zumindest der Beschleunigungssensoren und der Drehratensensoren ausgewertet und mit einem Straßenverlauf in der Straßenkarte verglichen. An ausgezeichneten Positionen bzw. Situationen lässt sich dann auf einfache Weise eine Fahrzeugpose des Fahrzeugs schätzen. Beispielsweise kann ein Ende einer Kurvenfahrt durch eine verschwindende Querbeschleunigung bestimmt werden. Ist dies der Fall, so wird die Fahrzeugposition entsprechend auf das Ende der Kurve in der Straßenkarte gesetzt. Die Fahrzeugorientierung wird gemäß einer in der Straßenkarte hinterlegten Fahrtrichtung gesetzt. Aus der derart bestimmten Fahrzeugposition und der derart bestimmten Fahrzeugorientierung ergibt sich dann eine Fahrzeugpose, die als Referenzfahrzeugpose verwendet wird. Auch bei dieser Ausführungsform kann beispielsweise eine negative oder positive Steigung zum Bestimmen der Position verwendet werden, wenn Stellen ausgeprägter Steigung in der Straßenkarte hinterlegt sind. Über einen Vergleich mit den erfassten Sensordaten zumindest der Beschleunigungssensoren (insbesondere auch derjenigen für eine vertikale Beschleunigung) kann die jeweilige Steigung bestimmt werden und durch Vergleich mit der Straßenkarte kann die Position und Orientierung (Fahrzeugpose) des Fahrzeugs in der Straßenkarte bestimmt werden.

Entsprechend lassen sich weitere Situationen finden, in denen das Bestimmen einer Referenzfahrzeugpose auf diese Weise mit Hilfe der Straßenkarte möglich ist. Beispielhaft genannt seien S-Kurven, bei denen ein Zeitpunkt des Übergangs zwischen den Kurvenformen durch einen Vorzeichenwechsel in der Querbeschleunigung ermittelt werden kann und somit ausgehend von der Straßenkarte auf die Fahrzeugpose geschlossen werden kann. Hierbei kann beispielsweise bei einem Vorzeichenwechsel in der Querbeschleunigung vorgesehen sein, die Fahrzeugpose derart zu setzen, dass eine Fahrzeugposition auf der (rechten) Fahrspur am Übergangspunkt der beiden Kurven der S-Kurve liegt und eine Fahrzeugorientierung gemäß einer Fahrtrichtung der Fahrspur gesetzt wird. Weiter beispielhaft können auch Abbiegevorgänge an Kreuzungen verwendet werden, da auch hier, ähnlich wie bei den Kurven, sehr genau ein Ende des Abbiegens ermittelt werden kann und eine Fahrzeugpose ausgehend von der Straßenkarte geschätzt werden kann. Die jeweilige Kreuzung kann insbesondere unter Berücksichtigung eines Kreuzungswinkels der sich kreuzenden Straßen identifiziert werden.

In einer Ausführungsform ist vorgesehen, dass die Referenzfahrzeugpose ausgehend von einem Signal eines Globalen Navigationssatellitensystems bestimmt wird. Dies ermöglicht eine besonders einfache Bereitstellung der Referenzfahrzeugpose. Insbesondere weisen die meisten modernen Fahrzeuge ohnehin ein Navigationssystem auf, das die Signale eines Globalen Navigationssatellitensystems (z.B. GPS) auswertet, sodass Kosten zusätzlicher Einrichtungen eingespart werden können.

Es kann auch vorgesehen sein, die Referenzfahrzeugpose durch eine Berücksichtigung von mehreren Verfahren zu schätzen, beispielsweise im Wege einer Sensordatenfusion.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Bestimmen einer Fahrzeugpose eines Fahrzeugs;
- Fig. 2: ein schematisches Ablaufdiagramm einer Ausführungsform des Verfahrens zum Bestimmen einer Fahrzeugpose eines Fahrzeugs.

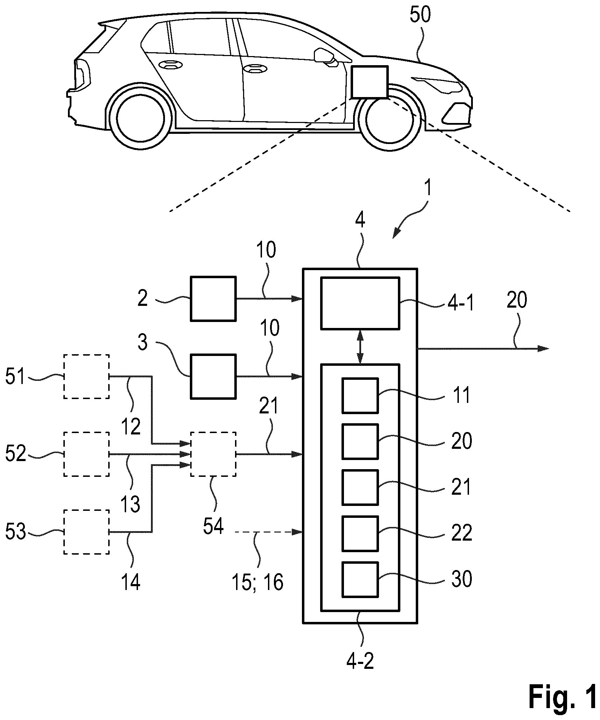

In Fig. 1 ist eine schematische Darstellung einer Ausführungsform der Vorrichtung 1 zum Bestimmen einer Fahrzeugpose 20 eines Fahrzeugs 50 gezeigt. Die Vorrichtung 1 umfasst Beschleunigungssensoren 2, Drehratensensoren 3 und eine Datenverarbeitungseinrichtung 4. Die Datenverarbeitungseinrichtung 4 umfasst eine Recheneinrichtung 4-1, beispielsweise einen Mikroprozessor, und eine Speichereinrichtung 4-2. Die Beschleunigungssensoren 2 und die Drehratensensoren 3 sind beispielsweise Teil eines Inertialnavigationssystems. Das Verfahren zum Bestimmen einer Fahrzeugpose 20 eines Fahrzeugs 50 wird nachfolgend anhand der Vorrichtung 1 erläutert.

Die Datenverarbeitungseinrichtung 4 ist dazu eingerichtet, ausgehend von Sensordaten 10 der Beschleunigungssensoren 2 und der Drehratensensoren 3 und einer bekannten Ausgangspose mittels Integration eine Fahrzeugpose 20 zu schätzen. Ferner erhält, insbesondere empfängt, die Datenverarbeitungseinrichtung 4 mindestens eine Referenzfahrzeugpose 21. Die Datenverarbeitungseinrichtung 4 korrigiert die geschätzte Fahrzeugpose 20 mit Hilfe der mindestens einen Referenzfahrzeugpose 21. Hierbei legt die Datenverarbeitungseinrichtung 4 zeitliche Abstände zwischen dem Korrigieren unter Berücksichtigung von einer aktuellen Fahrsituation 11 des Fahrzeugs 50 fest.

Die aktuelle Fahrsituation 11 wird beispielsweise ausgehend von den Sensordaten 10 der Beschleunigungssensoren 2 und der Drehratensensoren 3 mittels der Datenverarbeitungseinrichtung 4 bestimmt. Ausgehend von der bestimmten aktuellen Fahrsituation 11 kann die Datenverarbeitungseinrichtung 4 beispielsweise dazu eingerichtet sein, in einer im Speicher 4-2 hinterlegten Nachschlagetabelle (nicht gezeigt) zeitliche Abstände zwischen dem Korrigieren abzurufen und zu verwenden.

Es kann vorgesehen sein, dass die Referenzfahrzeugpose 21 mittels erfasster Kameradaten 12 mindestens einer Umfeldkamera 51 des Fahrzeugs 50 und/oder erfasster Radardaten 13 mindestens eines Radarsensors 52 des Fahrzeugs 50 und/oder erfasster Lidardaten 14 mindestens eines Lidarsensors 53 des Fahrzeugs 50 bestimmt wird. Die Referenzfahrzeugpose 21 kann beispielsweise mit Hilfe eines entsprechend hierfür eingerichteten Umfelderfassungssystems 54 unter Verwendung von an sich bekannten Verfahren zur Lokalisierung bestimmt werden. Hierbei kann das Umfelderfassungssystem 54 auch als Teil der Vorrichtung 1 ausgebildet sein. Das Bestimmen der Referenzfahrzeugpose 21 wird insbesondere (nur) dann durchgeführt wird, wenn eine Korrektur der geschätzten Fahrzeugpose 20 durchgeführt werden soll. Hierdurch kann eine für das Auswerten der Sensordaten 12, 13, 14 benötigte Rechenleistung gering gehalten werden.

Es kann vorgesehen sein, dass zum Bestimmen der aktuellen Fahrsituation 11 ein einzelner Freiheitsgrad der Beschleunigungssensoren 2 und/oder der Drehratensensoren 3 überwacht und ausgewertet wird.

Es kann vorgesehen sein, dass zum Bestimmen der aktuellen Fahrsituation 11 eine Mehrzahl von Freiheitsgraden der Beschleunigungssensoren 2 und/oder der Drehratensensoren 3 überwacht und ausgewertet wird.

Es kann vorgesehen sein, dass als Fahrsituationen 11 zumindest Geradeausfahrten und/oder Kurvenfahrten und/oder Bergfahrten unterschieden werden. Dies erfolgt beispielsweise, indem mittels der Datenverarbeitungseinrichtung 4 eine in den Sensordaten 10 abgebildete Querbeschleunigung mit einem (oder mehreren) vorgegebenen Schwellenwert(en) verglichen wird, bei dessen (deren) Überschreitung auf eine Kurvenfahrt geschlossen wird. Ferner kann eine in den Sensordaten 10 abgebildete Drehrate berücksichtigt und ausgewertet werden. Zum Erkennen der Bergfahrten wird insbesondere auch eine Beschleunigung in vertikaler Richtung des Fahrzeugs 50 ausgewertet.

Es kann vorgesehen sein, dass die ausgehend von den Sensordaten 10 zumindest der Beschleunigungssensoren 2 und der Drehratensensoren 3 geschätzte Fahrzeugpose 20 mit einer ausgehend von Radumdrehungen 15 und Lenkwinkeln 16 geschätzten weiteren Fahrzeugpose 22 verglichen wird, wobei die geschätzte Fahrzeugpose 21, insbesondere zusätzlich, korrigiert wird, wenn eine Differenz zwischen der geschätzten Fahrzeugpose 20 und der geschätzten weiteren Fahrzeugpose 22 einen vorgegebenen Grenzwert überschreitet.

Es kann vorgesehen sein, dass die Referenzfahrzeugpose 21 ausgehend von einem gewichteten Mittelwert bestimmt wird, wobei der Mittelwert sich gewichtet zusammensetzt zumindest aus der Fahrzeugpose 21, die ausgehend von den Sensordaten 10 zumindest der Beschleunigungssensoren 2 und der Drehratensensoren 3 geschätzt wird, und einer weiteren Fahrzeugpose 22, die ausgehend von Radumdrehungen 15 und Lenkwinkeln 16 geschätzt wird.

Es kann vorgesehen sein, dass die aktuelle Fahrsituation 11 ausgehend von einer Straßenkarte 30 bestimmt wird. Die Straßenkarte 30 ist beispielsweise in dem Speicher 4-2 hinterlegt. Insbesondere kann vorgesehen sein, dass die Referenzfahrzeugpose 21 ausgehend von der Straßenkarte 30 unter Berücksichtigung der aktuellen Fahrsituation 11 bestimmt wird.

Weiterbildend kann vorgesehen sein, dass die Referenzfahrzeugpose 21 ausgehend von einem mit der aktuellen Fahrsituation 11 korrespondierenden Fahrbahnverlauf in der Straßenkarte 30 bestimmt wird.

Es kann vorgesehen sein, dass die Referenzfahrzeugpose 21 ausgehend von einem Signal eines Globalen Navigationssatellitensystems (nicht gezeigt), beispielsweise eines Global Positioning Systems (GPS) bestimmt wird.

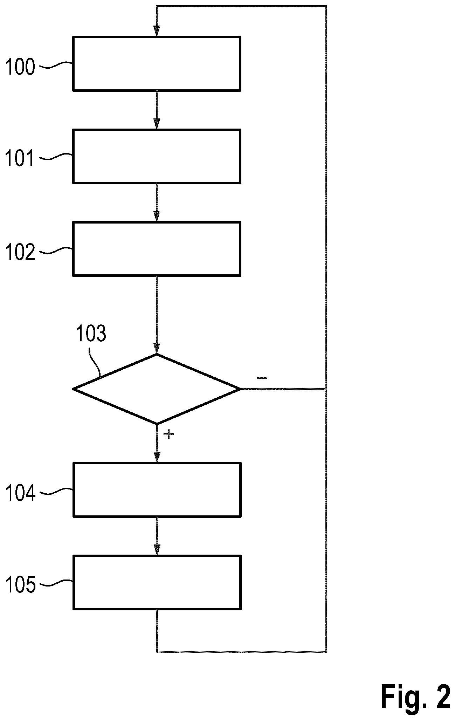

Die Fig. 2 zeigt ein schematisches Ablaufdiagramm einer Ausführungsform des Verfahrens zum Bestimmen einer Fahrzeugpose eines Fahrzeugs.

In einer Maßnahme 100 wird die Fahrzeugpose ausgehend von Sensordaten zumindest von Beschleunigungssensoren und Drehratensensoren und einer bekannten Ausgangspose mittels Integration geschätzt. Die Ausgangspose ist hierbei insbesondere die letzte geschätzte Fahrzeugpose. Der Wert für die geschätzte Fahrzeugpose wird bereitgestellt.

In einer Maßnahme 101 wird eine aktuelle Fahrsituation bestimmt. Dies erfolgt beispielsweise ausgehend von Sensordaten zumindest der Beschleunigungssensoren und der Drehratensensoren. Es kann hierbei vorgesehen sein, dass zum Bestimmen der aktuellen Fahrsituation ein einzelner Freiheitsgrad der Beschleunigungssensoren und/oder der Drehratensensoren überwacht und ausgewertet wird. Alternativ kann vorgesehen sein, dass zum Bestimmen der aktuellen Fahrsituation eine Mehrzahl von Freiheitsgraden der Beschleunigungssensoren und/oder der Drehratensensoren überwacht und ausgewertet wird. Insbesondere ist vorgesehen, dass als Fahrsituationen zumindest Geradeausfahrten und Kurvenfahrten unterschieden werden.

Es kann alternativ oder zusätzlich vorgesehen sein, dass die aktuelle Fahrsituation ausgehend von einer Straßenkarte bestimmt wird.

In einer Maßnahme 102 werden zeitliche Abstände zwischen Korrekturzeitpunkten unter Berücksichtigung von der bestimmten aktuellen Fahrsituation des Fahrzeugs festgelegt.

In einer Maßnahme 103 wird überprüft, ob das Zeitintervall für einen festgelegten zeitlichen Abstand bereits abgelaufen ist. Ist dies nicht der Fall, so wird zur Maßnahme 100 gesprungen, wobei die Anfangspose jetzt der in Maßnahme 100 geschätzten Fahrzeugpose entspricht. Ist dies hingegen der Fall, so wird mit Maßnahme 104 fortgefahren.

In der Maßnahme 104 wird eine Referenzfahrzeugpose erhalten, insbesondere empfangen. Es kann hierbei vorgesehen sein, dass die Referenzfahrzeugpose ausgehend von einem gewichteten Mittelwert bestimmt wird, wobei der Mittelwert sich gewichtet zusammensetzt zumindest aus der Fahrzeugpose, die ausgehend von den Sensordaten zumindest der Beschleunigungssensoren und der Drehratensensoren geschätzt wird, und einer weiteren Fahrzeugpose, die ausgehend von Radumdrehungen und Lenkwinkeln geschätzt wird.

Es kann auch vorgesehen sein, dass die Referenzfahrzeugpose mittels erfasster Kameradaten mindestens einer Umfeldkamera des Fahrzeugs und/oder erfasster Radardaten mindestens eines Radarsensors des Fahrzeugs und/oder erfasster Lidardaten mindestens eines Lidarsensors des Fahrzeugs bestimmt wird.

Ferner kann vorgesehen sein, dass die Referenzfahrzeugpose ausgehend von einer Straßenkarte unter Berücksichtigung der aktuellen Fahrsituation bestimmt wird. Hierbei kann insbesondere vorgesehen sein, dass die Referenzfahrzeugpose ausgehend von einem mit der aktuellen Fahrsituation korrespondierenden Fahrbahnverlauf in der Straßenkarte bestimmt wird.

Es kann auch vorgesehen sein, dass die Referenzfahrzeugpose ausgehend von einem Signal eines Globalen Navigationssatellitensystems bestimmt wird.

In einer Maßnahme 105 wird die geschätzte Fahrzeugpose mit Hilfe von mindestens einer Referenzfahrzeugpose korrigiert. Die korrigierte geschätzte Fahrzeugpose wird bereitgestellt.

Anschließend wird mit der Maßnahme 100 fortgefahren, wobei die Anfangspose jetzt der korrigierten geschätzten Fahrzeugpose entspricht.

Weitere Ausführungsbeispiele des Verfahrens wurden bereits voranstehend mit Bezug auf die Fig. 1 beschrieben.

### Bezugszeichenliste

- 1: Vorrichtung
- 2: Beschleunigungssensor(en)
- 3: Drehratensensor(en)
- 4: Recheneinrichtung
- 4-1: Recheneinrichtung
- 4-2: Speichereinrichtung
- 10: Sensordaten
- 11: aktuelle Fahrsituation
- 12: Kameradaten
- 13: Radardaten
- 14: Lidardaten
- 15: Radumdrehungen
- 16: Lenkwinkel
- 20: geschätzte Fahrzeugpose
- 21: Referenzfahrzeugpose
- 22: weitere Fahrzeugpose
- 30: Straßenkarte
- 50: Fahrzeug
- 51: Umfeldkamera
- 52: Radarsensor
- 53: Lidarsensor
- 54: Umfelderfassungssystem
- 100-105: Maßnahmen des Verfahrens

## Patentansprüche

1. Verfahren zum Bestimmen einer Fahrzeugpose (20) eines Fahrzeugs (50),
wobei die Fahrzeugpose (20) ausgehend von Sensordaten (10) zumindest von Beschleunigungssensoren (2) und Drehratensensoren (3) und einer bekannten Ausgangspose mittels Integration geschätzt wird,
wobei die geschätzte Fahrzeugpose (20) mit Hilfe von mindestens einer Referenzfahrzeugpose (21) korrigiert wird,
wobei zeitliche Abstände zwischen dem Korrigieren unter Berücksichtigung von einer aktuellen Fahrsituation (11) des Fahrzeugs (50) festgelegt werden.

2. Verfahren nach Anspruch 1, **dadurch gekennzeichnet, dass** die aktuelle Fahrsituation (11) ausgehend von Sensordaten (10) zumindest der Beschleunigungssensoren (2) und der Drehratensensoren (3) bestimmt wird.

3. Verfahren nach Anspruch 2, **dadurch gekennzeichnet, dass** zum Bestimmen der aktuellen Fahrsituation (11) ein einzelner Freiheitsgrad der Beschleunigungssensoren (2) und/oder der Drehratensensoren (3) überwacht und ausgewertet wird.

4. Verfahren nach Anspruch 2, **dadurch gekennzeichnet, dass** zum Bestimmen der aktuellen Fahrsituation (11) eine Mehrzahl von Freiheitsgraden der Beschleunigungssensoren (2) und/oder der Drehratensensoren (3) überwacht und ausgewertet wird.

5. Verfahren nach einem der vorangegangenen Ansprüche, **dadurch gekennzeichnet, dass** als Fahrsituationen (11) zumindest Geradeausfahrten und/oder Kurvenfahrten und/oder Bergfahrten unterschieden werden.

6. Verfahren nach einem der vorangegangenen Ansprüche, **dadurch gekennzeichnet, dass** die ausgehend von den Sensordaten (11) zumindest der Beschleunigungssensoren (2) und der Drehratensensoren (3) geschätzte Fahrzeugpose (11) mit einer ausgehend von Radumdrehungen (15) und Lenkwinkeln (16) geschätzten weiteren Fahrzeugpose (22) verglichen wird, wobei die geschätzte Fahrzeugpose (20) korrigiert wird, wenn eine Differenz zwischen der geschätzten Fahrzeugpose (20) und der geschätzten weiteren Fahrzeugpose (22) einen vorgegebenen Grenzwert überschreitet.

7. Verfahren nach einem der vorangegangenen Ansprüche, **dadurch gekennzeichnet, dass** die Referenzfahrzeugpose (21) ausgehend von einem gewichteten Mittelwert bestimmt wird, wobei der Mittelwert sich gewichtet zusammensetzt zumindest aus der Fahrzeugpose (20), die ausgehend von den Sensordaten (10) zumindest der Beschleunigungssensoren (2) und der Drehratensensoren (3) geschätzt wird, und einer weiteren Fahrzeugpose (22), die ausgehend von Radumdrehungen (15) und Lenkwinkeln (16) geschätzt wird.

8. Verfahren nach einem der vorangegangenen Ansprüche, **dadurch gekennzeichnet, dass** die Referenzfahrzeugpose (21) mittels erfasster Kameradaten (12) mindestens einer Umfeldkamera (51) des Fahrzeugs (50) und/oder erfasster Radardaten (13) mindestens eines Radarsensors (52) des Fahrzeugs (50) und/oder erfasster Lidardaten (14) mindestens eines Lidarsensors (53) des Fahrzeugs (50) bestimmt wird.

9. Verfahren nach einem der vorangegangenen Ansprüche, **dadurch gekennzeichnet, dass** die aktuelle Fahrsituation (11) ausgehend von einer Straßenkarte (30) bestimmt wird.

10. Vorrichtung (1) zum Bestimmen einer Fahrzeugpose (20) eines Fahrzeugs (50), umfassend:
Beschleunigungssensoren (2),
Drehratensensoren (3), und
eine Datenverarbeitungseinrichtung (4),
wobei die Datenverarbeitungseinrichtung (4) dazu eingerichtet ist, ausgehend von Sensordaten (10) zumindest der Beschleunigungssensoren (2) und der Drehratensensoren (3) und einer bekannten Ausgangspose mittels Integration eine Fahrzeugpose (20) zu schätzen, mindestens eine Referenzfahrzeugpose (21) zu erhalten und die geschätzte Fahrzeugpose (20) mit Hilfe der mindestens einen Referenzfahrzeugpose (21) zu korrigieren, und zeitliche Abstände zwischen dem Korrigieren unter Berücksichtigung von einer aktuellen Fahrsituation (11) des Fahrzeugs (50) festzulegen.

## Claims

1. Method for determining a vehicle pose (20) of a vehicle (50),
wherein the vehicle pose (20) is estimated by means of integration based on sensor data (10) from at least acceleration sensors (2) and angular rate sensors (3), and a known initial pose,
wherein the estimated vehicle pose (20) is corrected by means of at least one reference vehicle pose (21),
wherein time intervals between the corrections are established taking into account a current driving situation (11) of the vehicle (50).

2. Method according to claim 1, **characterized in that** the current driving situation (11) is determined based on sensor data (10) from at least the acceleration sensors (2) and the angular rate sensors (3).

3. Method according to claim 2, **characterized in that,** to determine the current driving situation (11), an individual degree of freedom of the acceleration sensors (2) and/or the angular rate sensors (3) is monitored and evaluated.

4. Method according to claim 2, **characterized in that,** to determine the current driving situation (11), a plurality of degrees of freedom of the acceleration sensors (2) and/or the angular rate sensors (3) are monitored and evaluated.

5. Method according to any of the preceding claims, **characterized in that** at least driving straight-ahead and/or cornering and/or uphill driving can be distinguished as driving situations (11).

6. Method according to any of the preceding claims, **characterized in that** the vehicle pose (11) estimated on the basis of the sensor data (11) from at least the acceleration sensors (2) and the angular rate sensors (3) is compared with an additional vehicle pose (22) estimated on the basis of wheel revolutions (15) and steering angles (16), the estimated vehicle pose (20) being corrected if a difference between the estimated vehicle pose (20) and the estimated additional vehicle pose (22) exceeds a predetermined limit value.

7. Method according to any of the preceding claims, **characterized in that** the reference vehicle pose (21) is determined based on a weighted mean value, the mean value being composed, in a weighted manner, of at least the vehicle pose (20) which is estimated based on the sensor data (10) from at least the acceleration sensors (2) and the angular rate sensors (3), and an additional vehicle pose (22) which is estimated based on wheel revolutions (15) and steering angles (16).

8. Method according to any of the preceding claims, **characterized in that** the reference vehicle pose (21) is determined by means of recorded camera data (12) from at least one surrounding camera (51) of the vehicle (50) and/or recorded radar data (13) from at least one radar sensor (52) of the vehicle (50) and/or recorded lidar data (14) from at least one lidar sensor (53) of the vehicle (50).

9. Method according to any of the preceding claims, **characterized in that** the current driving situation (11) is determined based on a road map (30).

10. Device (1) for determining a vehicle pose (20) of a vehicle (50),
comprising:
acceleration sensors (2),
angular rate sensors (3), and
a data processing device (4),
wherein the data processing device (4) is designed to estimate a vehicle pose (20) by means of integration based on sensor data (10) from at least the acceleration sensors (2) and the angular rate sensors (3), and a known initial pose, to obtain at least one reference vehicle pose (21) and to correct the estimated vehicle pose (20) by means of the at least one reference vehicle pose (21), and to establish time intervals between the corrections, taking into account a current driving situation (11) of the vehicle (50).

## Revendications

1. Procédé de détermination d'une pose de véhicule (20) d'un véhicule (50),
dans lequel la pose de véhicule (20) est estimée au moyen d'une intégration à partir de données de capteurs (10) provenant au moins de capteurs d'accélération (2) et de capteurs de vitesse de rotation (3) et d'une pose de départ connue,
dans lequel la pose de véhicule (20) estimée est corrigée à l'aide d'au moins une pose de véhicule de référence (21),
dans lequel des intervalles de temps entre les corrections sont fixés en tenant compte d'une situation de conduite actuelle (11) du véhicule (50).

2. Procédé selon la revendication 1, **caractérisé en ce que** la situation de conduite actuelle (11) est déterminée à partir de données de capteurs (10) au moins des capteurs d'accélération (2) et des capteurs de vitesse de rotation (3).

3. Procédé selon la revendication 2, **caractérisé en ce que,** pour déterminer la situation de conduite actuelle (11), un seul degré de liberté des capteurs d'accélération (2) et/ou des capteurs de vitesse de rotation (3) est surveillé et évalué.

4. Procédé selon la revendication 2, **caractérisé en ce que,** pour déterminer la situation de conduite actuelle (11), une pluralité de degrés de liberté des capteurs d'accélération (2) et/ou des capteurs de vitesse de rotation (3) est surveillée et évaluée.

5. Procédé selon l'une des revendications précédentes,
**caractérisé en ce qu'on** distingue comme situations de conduite (11) au moins des trajets en ligne droite et/ou des trajets en virage et/ou des trajets en montagne.

6. Procédé selon l'une des revendications précédentes,
**caractérisé en ce que** la pose de véhicule (11) estimée à partir des données de capteur (11) au moins des capteurs d'accélération (2) et des capteurs de vitesse de rotation (3) est comparée à une autre pose de véhicule (22) estimée à partir des rotations de roue (15) et des angles de braquage (16), dans lequel la pose de véhicule (20) estimée est corrigée lorsqu'une différence entre la pose de véhicule (20) estimée et l'autre pose de véhicule (22) estimée dépasse une valeur limite prédéfinie.

7. Procédé selon l'une des revendications précédentes,
**caractérisé en ce que** la pose de véhicule de référence (21) est déterminée à partir d'une valeur moyenne pondérée, dans lequel la valeur moyenne est composée de manière pondérée d'au moins la pose de véhicule (20) estimée à partir des données de capteur (10) au moins des capteurs d'accélération (2) et des capteurs de vitesse de rotation (3), et d'une autre pose de véhicule (22) estimée à partir des rotations de roue (15) et des angles de braquage (16).

8. Procédé selon l'une des revendications précédentes,
**caractérisé en ce que** la pose de véhicule de référence (21) est déterminée au moyen de données de caméra (12) saisies d'au moins une caméra d'environnement (51) du véhicule (50) et/ou de données de radar (13) saisies d'au moins un capteur de radar (52) du véhicule (50) et/ou de données de lidar (14) saisies d'au moins un capteur de lidar (53) du véhicule (50).

9. Procédé selon l'une des revendications précédentes,
**caractérisé en ce que** la situation de conduite actuelle (11) est déterminée à partir d'une carte routière (30).

10. Dispositif (1) de détermination d'une pose de véhicule (20) d'un véhicule (50),
comprenant :
des capteurs d'accélération (2),
des capteurs de vitesse de rotation (3), et
un dispositif de traitement de données (4),
dans lequel le dispositif de traitement de données (4) est conçu pour, à partir de données de capteurs (10) au moins des capteurs d'accélération (2) et des capteurs de vitesse de rotation (3) et d'une position de départ connue, estimer au moyen d'une intégration une pose de véhicule (20), obtenir au moins une pose de véhicule de référence (21) et corriger la pose de véhicule (20) estimée à l'aide de l'au moins une position de véhicule de référence (21), et fixer des intervalles de temps entre la correction en tenant compte d'une situation de conduite actuelle (11) du véhicule (50).
